# EUROPEAN PATENT SPECIFICATION

(11) **EP 3 819 197 B1**
(45) Date of publication and mention of the grant of the patent: **19.06.2024**
(21) Application number: 20205927.5
(22) Date of filing: 05.11.2020
(51) Int. Cl.: B62H 5/06, B62K 19/32

(54) **ANTI-THEFT DEVICE FOR A BICYCLE AND MOUNTING METHOD THEREOF**
DIEBSTAHLSICHERUNGSVORRICHTUNG FÜR EIN FAHRRAD UND MONTAGEVERFAHREN DAFÜR
DISPOSITIF ANTIVOL POUR BICYCLETTE ET SON PROCÉDÉ DE MONTAGE

(30) Priority: 07.11.2019 IT 201900020552; 23.06.2020 IT 202000014965
(43) Date of publication of application: 12.05.2021
(73) Proprietor: Spoto, Patrizio, 20831 Seregno MB (IT)
(72) Inventor: Spoto, Patrizio, 20831 Seregno MB (IT)
(74) Representative: Longoni, Alessandra

(56) References cited:
- WO-A1-03/055738
- CN-U- 201 882 173
- DE-C- 873 953
- GB-A- 562 170
- GB-A- 2 496 671
- US-A- 1 146 053
- US-A- 2 303 241
- US-A- 3 136 149
- US-A- 3 660 995

## Description

### Technical Field

The present invention relates, in general, to an anti-theft device for bicycles. In particular, the present invention relates to a steering lock device to be used for bicycles of any type, comprising bicycles powered by electric or internal combustion engines wherein frames with a front steering wheel and one or more rear wheels are comprised.

### Background Art

US2303241 discloses the preamble of independent claim 1 and the corresponding features of the method of independent claim 9. Bicycles are known comprising frames with a front steering wheel and one or more rear wheels.

It is also known that the value of bicycles can be high for various reasons such as characteristics of the frame, of the used materials, etc.

It is also known that the diffusion of bicycles is enormously growing following the growing sensitivity to the environmental impact of the usual circulation means in inhabited areas.

The often high value of bicycles and their large and growing popularity encourages malicious people to steal bicycles for immediate gains without effort.

However, innumerable types of anti-theft devices for bicycles are known. The known devices, however, are generally applicable externally to components of the bicycles, for example to the wheels and to the frame of bicycles.

A common problem of known anti-theft devices is that they can generally be removed from the bicycles by way of easily available break-in devices such as, for example, cutters, hacksaws, etc.

In general, the Inventor has noted that the known art does not seem to be able to effectively solve the problem of avoiding the theft of bicycles by way of easily available break-in devices.

### Disclosure of the Invention

The object of the present invention is thus to solve the outlined above problems of the known prior art.

Such an object is achieved by way of an anti-theft device for bicycles comprising the features set forth in the claims that follow.

The present invention also relates to a method for assembling and mounting the anti-theft device.

Claims as well as the description and drawings are an integral part of the teaching of the present invention.

The following summary of the invention is provided in order to provide a basic understanding of some aspects and features of the invention.
This summary is not an extensive overview of the invention, and as such it is not intended to particularly identify key or critical elements of the invention, or to delineate the scope of the invention. Its sole purpose is to present some concepts of the invention, in a simplified and synthetic form, so as to anticipate some elements disclosed by way of the drawings and the detailed description that are presented herein below.

According to a feature of the invention, the anti-theft device comprises a lock block comprising a single body configured to be inserted and hiddenly secured inside a steerer tube of a bicycle and to lock, by way of a retractable pin protruding from the single body, the rotation of the steerer tube as to a frame element comprised in a front area of the bicycle.

According to a feature of the invention, the retractable pin is configured to hook a hole made in the frame element in order to block the movement of the steerer tube as to the frame element and therefore as to the frame.

According to a feature of the invention, the retractable pin is configured to hook a slot formed in a sleeve internally secured to the frame element so as to block the movement of the steerer tube as to the sleeve and therefore as to the frame element to which the sleeve is secured.

According to a further feature of the present invention, the single body of the lock block comprises, in an its upper part, a thread configured to cooperate, by screwing, with a locking ring nut configured to compact parts comprised in the front area of the bicycle and seal the body of the lock block inside the frame element.

According to another feature, the present invention also relates to a method for mounting the anti-theft device in a front area of a bicycle according to any one of the disclosed embodiments.

### Brief Description of Drawings

These and further features and advantages of the present invention will appear more clearly from the following detailed description of preferred embodiments, provided by way of non-limiting examples with reference to the attached drawings, in which components designated by same or similar reference numerals indicate components having same or similar functionality and construction and wherein:
Fig. 1a shows an overall view of an anti-theft device applied to a front area of a bicycle according to a not claimed embodiment;
Fig. 1b and Fig. 1c respectively show an overall view of an anti-theft device applied to a front area of a bicycle according to a embodiment of the present invention and an exploded schematic drawing of the same anti-theft device;
Fig. 2 shows an axonometric view from above of the anti-theft device applied to the front area of the bicycle according to the not claimed embodiment and to the claimed embodiment of the present invention; and
Fig. 3a, 3b, 3c show in detail side views of parts of the anti-theft device.

In the course of this description, terms such as: upper, lower, longitudinal, orthogonal, lateral, above, below, etc. are used in their conventional meaning unless otherwise indicated.

### Best Modes for Carrying Out the Invention

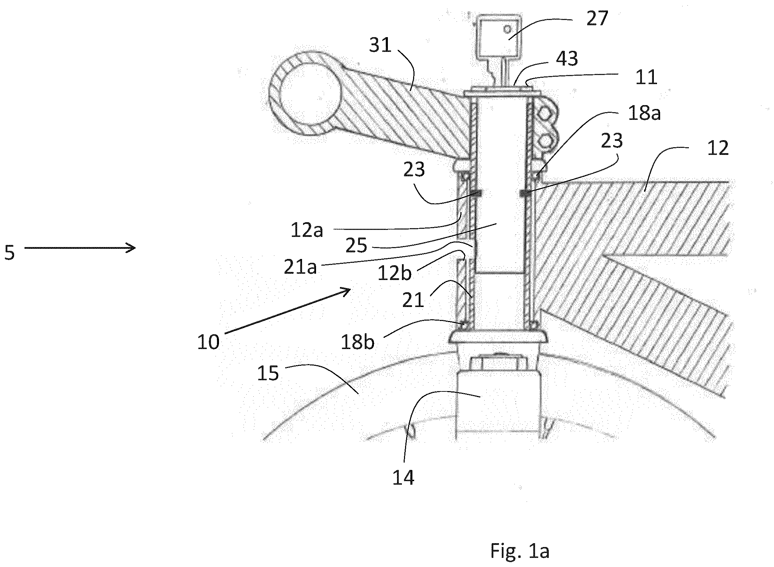

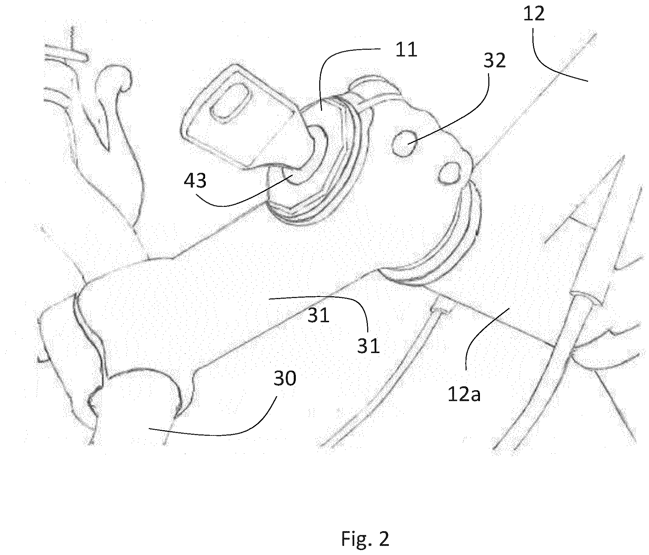

With reference to Figs. 1a and 2, an anti-theft device 10 is shown which, is applied to a front area 5 of a bicycle.

Figures 1a and 2 show, as regards the bicycle, a part or portion of the front frame 12, a part or portion of the fork 14, for example of a suspension fork on which a front wheel 15 is mounted in use, and a handlebar stem (stem) 31 provided to support a handlebar 30.

The fork 14 comprises a steerer tube 21, fixed to the fork, which, in use, is inserted in the front frame 12, in particular in a vertical or substantially vertical frame element (head tube) 12a of the front frame (frame) 12 which, preferably, comprises a hollow tube.

According to figure 1a a lock block 20 is comprised inside the steerer tube 21 and fixed to size, at a predetermined height, for example by way of one or more mechanical pins or dowels 23, for example hidden pins or threaded dowels, to the steerer tube 21.

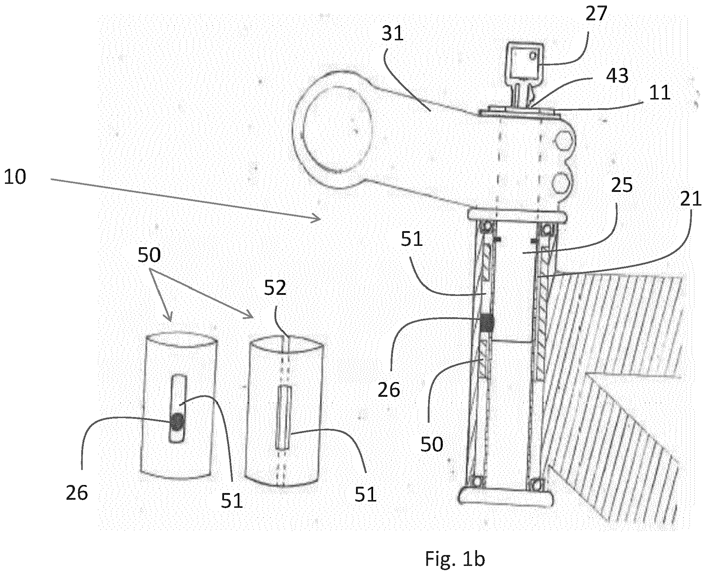

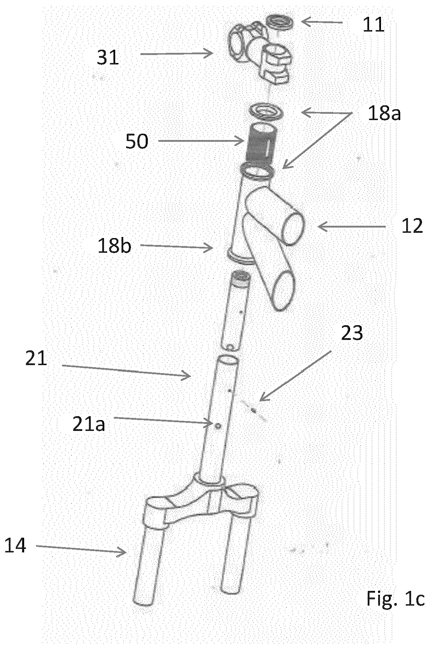

According to the claimed embodiment, the lock block is still provided included inside the steerer tube 21 (Fig. 1b, 1c) and secured thereto.

According to this claimed embodiment it is also provided that a sleeve 50, for example a cylindrical sleeve of predetermined length, is comprised inside the frame element 12a so as to be interposed between the steerer tube 21 and the vertical or substantially vertical frame element 12a.

The sleeve 50, preferably of conical or cylindrical shape, is secured, for example by pressure or by way of adhesives, to the frame element 12a and comprises a hole or, preferably, a longitudinal slot 51, of a length, for example, shorter than the length of the sleeve, which extends in a preferably intermediate area between the ends of the sleeve 50.

According to this claimed embodiment, the sleeve is preferably made of metal or also made of carbon or carbon alloy.

According to a further version of this claimed embodiment, it is also provided that the sleeve, for example, is diametrically of elastic type and comprises, preferably in an area opposite to the slot 51, a longitudinal cut 52 of length equal to the length of the sleeve.

According to this further version, it is provided that the sleeve, preferably made of metal, is inserted under an elastic pressure inside the frame element 12a so as to be elastically secured, in any case, to the frame element 12a and therefore to the frame 12.

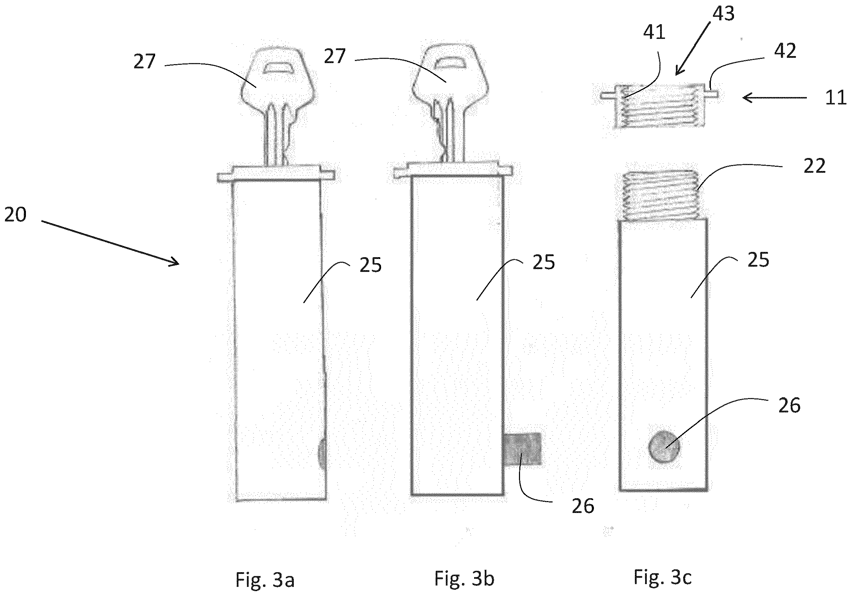

The lock block 20 (Fig. 1a-3c), according to not claimed embodiment and to the claimed embodiment, comprises a lock body (body) 25, preferably a single cylindrical body, and a retractable pin 26 controlled by a key 27 so as to protrude from the body, preferably in a direction orthogonal to the body 25, or to not protrude from the body 25, depending on the position of the key 27.

In use, according to the not claimed embodiment, the retractable pin 26, when it protrudes from the body 25, is expected to protrude from a hole 21a (Fig. 1a) suitably provided in the steerer tube 21 and hook a hole 12b, provided in the frame element 12a, therefore in the frame 12, so as to block the movement of the steerer tube 21 and therefore of the handlebar stem 31, connected to it, as to the frame 12.

In use, according to the claimed embodiment, the retractable pin 26, when protruding from the body 25, is configured to protrude from the hole 21a (Fig. 1b) provided in the steerer tube 21 and hook the slot 51 provided in the sleeve 50 fixed to the frame 12, so as to block the movement of the steerer tube 21 and therefore of the handlebar stem 31, connected to it, as to the frame element 12a and, consequently, to the frame 12, in a manner substantially equivalent to that provided in the first embodiment.

As easily understandable by a person skilled in the art, in the not claimed embodiment and to the claimed embodiment, the stem 31 of the handlebar 30 is fixed, in use, to the steerer tube 21 by way of one or more locking screws 32, so that the rotation or the non-rotation of the stem 31 of the handlebar 30 also involves the rotation or non-rotation of the steerer tube and, consequently, of the fork 14 and of the wheel 15 mounted on the fork 14.

Preferably at the two ends of the frame element 12a there are, in a known way, respective upper 18a and lower 18b bearings, for example ball bearings, provided to grant the rotation of the fork 14 and of the handlebar 30 as to the frame 12 in the front area 5.

According to the not claimed embodiment and to the claimed embodiment, a ring nut 11 is provided, comprising a thread 41, for example a female thread, a flange 42, projecting to size, and a hole 43, preferably a barycentric hole, wherein barycentric hole is the configured to grant access to the block lock 20 with the key 27 (Fig. 1a-1c), when in use.

The ring nut 11 is configured to compact together, by screwing or tightening, the handlebar stem 31, the frame element 12a and the fork 14.

In particular, according to the not claimed embodiment and to the claimed embodiment, the body 25 of the lock block 20 comprises, in an upper region, a thread 22, for example a thread of the male type, configured to cooperate, in use, with the thread 41 of the ring nut 11.

Even more particularly, by screwing the ring nut 11 onto the lock block 20, which is in turn fixed to the steerer tube 21, it is obtained the effect of pressing the flange 42 onto the handlebar stem 31 and, consequently, tightening and compacting each other, the handlebar stem 31, the frame element 12a and the fork 14 so as to seal the single body 25 of the lock block 20 inside the frame element 12a and leave the lock block 20 accessible to the key 27 thanks to the hole 43 in the ring nut. Obviously, as easily understandable by a person skilled in the art, the relative movement of the handlebar stem 31 and of the fork 14 as to the frame 12 is granted by the presence of the bearings 18a and 18b or by equivalent components.

In summary, by screwing the ring nut 11 onto the body 25 of the lock block 20 it is ensured that the handlebar 30, the frame 12 and fork 14 are compacted and that the body 25 of the lock block 20 is sealed inside the frame element 12a, thanks to the fact that the tightening ring nut 11 is configured to cooperate, in use, both with the handlebar stem 31 and with the body 25 of the lock block 20, fixed to the steerer tube 21.

It is provided that mounting or assembling the anti-theft device 10 comprises, for example, the following steps, according to the not claimed embodiment:
- inserting the lock block 20 in the steerer tube 21 of the fork 14,
- securing to size the single body 25 of the lock block 20 to the steerer tube 21 so as to position, in use, the retractable pin 26 in correspondence with the hole 21a in the steerer tube 21, so that the step of securing to size comprises, according to the not claimed embodiment, the step of positioning the retractable pin 26 at a predefined depth corresponding to the position of the hole 12b in the frame element 12a so that the pin can hook the hole 12b comprised in the frame 12,
- inserting the steerer tube 21 comprising the lock block in the frame 12, in particular in the vertical or substantially vertical element 12a, of the frame 12,
- compacting the handlebar stem 31, the frame element 12a and the fork 14 by way of the tightening ring nut 11 so that the body 25 of the lock block 20 is comprised inside the steerer tube 21 and therefore hidden inside the frame element 12a.

According to the claimed embodiment, a preliminary step is provided in which the sleeve 50 is inserted and secured to the frame element 12a and therefore to the frame 12.

According to the claimed embodiment, the step of securing to size the single body 25 of the lock block 20 to the steerer tube 21 comprises the step of:
- positioning the retractable pin 26 at a predefined depth corresponding to the position of the hole or slot 51 comprised in the sleeve 50 secured to the frame element 12a and, therefore, to the frame 12, so that the pin can hook, when protruding, the hole or slot 51 comprised in the sleeve 50, in a way substantially equivalent to what is provided in the not claimed embodiment.

Advantageously, it is apparent that, according to the not claimed embodiment and to the claimed embodiment, the body 25 of the lock block 20 is comprised inside the steerer tube 21, i.e. that the anti-theft device 10 is operative from the inside of the frame 12 of the bicycle and that it cannot be removed from the outside of the bicycle by way of easily available burglary devices such as, for example, cutters, hacksaws, etc.

The operation of the anti-theft device 10 disclosed up to now is as follows.

In common use of the bicycle, the retractable pin 26 of the lock block 20 is positioned so as not to protrude from the body 25 of the lock block.

In this configuration, the handlebar 30 and, therefore, the bicycle can be used normally.

In the event of a stop, it is possible to position the handlebar 30 in a position such that the retractable pin 26 can, controlled by the key 27, protrude from the body 25 of the lock block 20 and, according to the not claimed embodiment, interfere with the frame 12 of the bicycle and enter into the hole in the frame member 12b.

According to the claimed embodiment, in the event of a stop, it is possible to position the handlebar 30 in a position such that the retractable pin 26 can, controlled by the key 27, protrude from the body 25 of the lock block 20 and enter the slot or hole 51 obtained in the sleeve 50 secured to the frame 12.

According to all possible configurations, the handlebar 30, when the retractable pin 26 comes out and directly or indirectly hooks the frame element 12a, this remains locked in a certain position as to the frame and, therefore, the bicycle is no longer usable.

Obviously, as easily understandable by a person skilled in the art, the key can be retractable, according to possible variants, only in locked conditions.

According to further embodiments, it is provided that, once the key has been positioned in the locked position, the retractable pin 26 comes out automatically when the handlebar 30 is manually rotated into the position wherein the retractable pin is in correspondence with the hole 12b in the frame 12 or in correspondence with the slot or hole 51 comprised in the sleeve 50.

Of course, obvious changes and/or variations to the above disclosure are possible, as regards shapes, components, elements and connections as well as details of the disclosed construction and operation method without departing from the scope of the invention as defined by the claims that follow.

## Claims

1. An anti-theft device for bicycles, said bicycle comprising in a front area (5):
- a vertical or substantially vertical frame element (12a),
- a fork (14) comprising a steerer tube (21) fixed to the fork and arranged to be inserted in the frame element (12a),
and
- a handlebar stem (31) configured to be fixed to the steerer tube (21) when inserted, in use, in the frame element (12a), said anti-theft device comprises:
- a lock block (20) comprising a single body (25) configured to be inserted into and secured to said steerer tube (21), said lock block (20) further comprising a retractile pin (26) configured to protrude or not protrude from said single body (25) driven by a key (27),
- a sleeve (50) comprising a longitudinal slot or a hole (51), said sleeve being arranged to be interposed between the steerer tube (21) and the frame element (12a) and to be secured to the frame element, whereby, in use, said retractile pin (26) is arranged to hook said frame element (12a), when protruding from said single body, by hooking said longitudinal slot or hole (51), so as to block the movement of the steerer tube (21) as to the frame element (12a), **characterized by** a threaded ring nut (11) screwed, in use, to said single body of said lock block and configured to compact together the handlebar stem (31), the frame element (12a) and the fork (14).

2. The anti-theft device according to claim 1, wherein said sleeve is of conical or cylindrical shape.

3. The anti-theft device according to claim 1, wherein said sleeve (50) further comprises a longitudinal cut (52), of length equal to the length of the sleeve (50) and in an area opposite to the slot or hole (51), said sleeve being configured to be inserted into and secured to said frame element (12a) by way of a diametrical elastic pressure.

4. The anti-theft device according to any one of claims 1 to 3, wherein the single body (25) of the lock block (20) is internally secured to the steerer tube (21) by way of pins or mechanical grains (23).

5. The anti-theft device according to claim 4, wherein said pins or mechanical grains (23) are of threaded and hidden type.

6. The anti-theft device according to any one of claims 1 to 5, wherein said single body (25) of the lock block (20) comprises, in an upper zone, a thread (22) configured to cooperate by screwing with the ring nut (11), said ring nut comprising a flange (42) and a fitting thread (41) arranged to fit said thread (22) comprised in the upper zone of the lock block (20).

7. The anti-theft device according to claim 6, wherein said flange (42) is configured to apply a pressure on said handlebar stem (31) and to compact together by screwing the handlebar stem (31), the frame element (12a) and the fork (14), and to seal the single body (25) of the lock block (20) inside said frame element (12a).

8. The anti-theft device according to claim 6 or 7, wherein the thread (22), comprised in the upper area of the single body (25), is of the male type and the fitting thread (41), comprised in the ring nut (11), is of female type.

9. A method for mounting an anti-theft device (10) in a front area (5) of a bicycle, wherein said front area (5) comprises a handlebar stem (31), a vertical or substantially vertical frame element (12a) and a fork (14) and wherein said anti-theft device (10) comprises a lock block (20) comprising a single body (25) and a retractile pin (26) configured to protrude from said single body (25),
the method comprising the steps of:
- inserting the lock block (20) in a steerer tube (21) fixed to the fork (14)
- securing to size the single body (25) to the steerer tube (21) so as to locate, in use, the retractile pin (26) near a hole (21a) in the steerer tube (21) and hook , when protruding from said single body (25), a sleeve (50) interposed between the steerer tube (21) and the frame element (12a) and secured to the frame element,
- inserting the steerer tube (21) into the vertical or substantially vertical frame element (12a),
- directly fixing the handlebar stem (31) to the steerer tube,
- compacting the handlebar stem (31), the frame element (12a) and the fork (14) by way of a threaded ring nut (11) applied, in use, to said body (25) of said lock block (20) and to said handlebar stem (31).

10. The method according to claim 9, wherein
- said step of securing to size comprises the step of locating said retractable pin (26) next a longitudinal slot or a hole (51) comprised in the sleeve (50).

11. The method according to any one of claims 9 to 10, wherein said compacting step comprises the steps of:
- screwing said threaded ring nut (11) onto said single body (25), and
- pressing said handlebar stem (31) by way of a flange (42) comprised in said threaded ring nut (11).

12. The method according to any one of claims 9 to 11, wherein said compacting step comprises the step of
- sealing the single body (25) of the lock block (20) inside said frame element (12a) by way of said threaded ring nut (11).

## Patentansprüche

1. Diebstahlsicherungsvorrichtung für Fahrräder, wobei das Fahrrad in einem vorderen Bereich (5) Folgendes umfasst:
- ein vertikales oder im Wesentlichen vertikales Rahmenelement (12a),
- eine Gabel (14), die ein Steuerrohr (21) umfasst, das an der Gabel befestigt und dazu angeordnet ist, in das Rahmenelement (12a) eingesetzt zu werden,
und
- einen Lenkervorbau (31), der dazu konfiguriert ist, an dem Steuerrohr (21) befestigt zu sein, wenn es im Gebrauch in das Rahmenelement (12a) eingesetzt ist, wobei die Diebstahlsicherungsvorrichtung Folgendes umfasst:
- einen Verriegelungsblock (20), der einen Einzelkörper (25) umfasst, der dazu konfiguriert ist, in das Steuerrohr (21) eingesetzt und daran fixiert zu werden, wobei der Verriegelungsblock (20) ferner einen einziehbaren Stift (26) umfasst, der dazu konfiguriert ist, aus dem Einzelkörper (25), durch einen Schlüssel (27) angetrieben, herauszuragen oder nicht herauszuragen,
- eine Hülse (50), die einen länglichen Schlitz oder ein Loch (51) umfasst, wobei die Hülse so angeordnet ist, dass sie zwischen dem Steuerrohr (21) und dem Rahmenelement (12a) eingefügt und an dem Rahmenelement fixiert wird, wobei im Gebrauch der einziehbare Stift (26) so angeordnet ist, dass er in das Rahmenelement (12a) einhakt, wenn er aus dem Einzelkörper herausragt, indem er in den Längsschlitz oder das Loch (51) einhakt, um so die Bewegung des Steuerrohrs (21) in Bezug auf das Rahmenelement (12a) zu blockieren, **gekennzeichnet durch** eine mit Gewinde versehene Ringmutter (11), die im Gebrauch auf den Einzelkörper des Verriegelungsblocks geschraubt ist und dazu konfiguriert ist, den Lenkervorbau (31), das Rahmenelement (12a) und die Gabel (14) fest miteinander zu verbinden.

2. Diebstahlsicherungsvorrichtung nach Anspruch 1, wobei die Hülse eine konische oder zylindrische Form hat.

3. Diebstahlsicherungsvorrichtung nach Anspruch 1, wobei die Hülse (50) ferner einen länglichen Einschnitt (52) umfasst, dessen Länge gleich der Länge der Hülse (50) ist und der sich in einem Bereich gegenüber dem Schlitz oder Loch (51) befindet, wobei die Hülse dazu konfiguriert ist, mittels eines diametralen elastischen Drucks in das Rahmenelement (12a) eingesetzt und daran fixiert zu werden.

4. Diebstahlsicherungsvorrichtung nach einem der Ansprüche 1 bis 3, wobei der Einzelkörper (25) des Verriegelungsblocks (20) innen mittels Stiften oder mechanischen Teilen (23) an dem Steuerrohr (21) fixiert ist.

5. Diebstahlsicherungsvorrichtung nach Anspruch 4, wobei die Stifte oder mechanischen Teile (23) vom Typ mit Gewinde und vom verborgenen Typ sind.

6. Diebstahlsicherungsvorrichtung nach einem der Ansprüche 1 bis 5, wobei der Einzelkörper (25) des Verriegelungsblocks (20) in einer oberen Region ein Gewinde (22) umfasst, das dazu konfiguriert ist, durch Verschrauben mit der Ringmutter (11) zusammenzuwirken, wobei die Ringmutter einen Flansch (42) und ein Passgewinde (41) umfasst, das so angeordnet ist, dass es zu dem Gewinde (22) passt, das in der oberen Region des Verriegelungsblocks (20) umfasst ist.

7. Diebstahlsicherungsvorrichtung nach Anspruch 6, wobei der Flansch (42) dazu konfiguriert ist, einen Druck auf den Lenkervorbau (31) auszuüben und durch Verschrauben den Lenkervorbau (31), das Rahmenelement (12a) und die Gabel (14) fest miteinander zu verbinden und den Einzelkörper (25) des Verriegelungsblocks (20) innerhalb des Rahmenelements (12a) abzudichten.

8. Diebstahlsicherungsvorrichtung nach Anspruch 6 oder 7, wobei das Gewinde (22), das in dem oberen Bereich des Einzelkörpers (25) umfasst ist, vom Typ Außengewinde ist und das Passgewinde (41), das in der Ringmutter (11) umfasst ist, vom Typ Innengewinde ist.

9. Verfahren zum Montieren einer Diebstahlsicherungsvorrichtung (10) in einem vorderen Bereich (5) eines Fahrrads, wobei der vordere Bereich (5) einen Lenkervorbau (31), ein vertikales oder im Wesentlichen vertikales Rahmenelement (12a) und eine Gabel (14) umfasst und wobei die Diebstahlsicherungsvorrichtung (10) einen Verriegelungsblock (20) umfasst, der einen Einzelkörper (25) und einen einziehbaren Stift (26) umfasst, der dazu konfiguriert ist, aus dem Einzelkörper (25) herauszuragen,
wobei das Verfahren die folgenden Schritte umfasst:
- Einsetzen des Verriegelungsblocks (20) in ein Steuerrohr (21), das an der Gabel (14) befestigt ist,
- Fixieren des Einzelkörpers (25) an dem Steuerrohr (21) auf die richtige Größe, um im Gebrauch den einziehbaren Stift (26) in der Nähe eines Lochs (21a) in dem Steuerrohr (21) zu positionieren und einzuhaken, wenn er aus dem Einzelkörper (25) herausragt, wobei eine Hülse (50) zwischen dem Steuerrohr (21) und dem Rahmenelement (12a) eingefügt und an dem Rahmenelement fixiert ist,
- Einsetzen des Steuerrohrs (21) in das vertikale oder im Wesentlichen vertikale Rahmenelement (12a),
- direktes Befestigen des Lenkervorbaus (31) an dem Steuerrohr,
- festes Verbinden des Lenkervorbaus (31), des Rahmenelements (12a) und der Gabel (14) mittels einer mit Gewinde versehenen Ringmutter (11), die im Gebrauch an dem Körper (25) des Verriegelungsblocks (20) und an dem Lenkervorbau (31) angebracht wird.

10. Verfahren nach Anspruch 9, wobei
- der Schritt des Fixierens auf die richtige Größe den Schritt eines Positionierens des einziehbaren Stifts (26) neben einem länglichen Schlitz oder einem Loch (51), das in der Hülse (50) umfasst ist, umfasst.

11. Verfahren nach einem der Ansprüche 9 bis 10, wobei der Schritt des festen Verbindens die folgenden Schritte umfasst:
- Verschrauben der mit Gewinde versehenen Ringmutter (11) an dem Einzelkörper (25) und
- Drücken des Lenkervorbaus (31) mittels eines Flansches (42), der in der mit Gewinde versehenen Ringmutter (11) umfasst ist.

12. Verfahren nach einem der Ansprüche 9 bis 11, wobei der Schritt des festen Verbindens den folgenden Schritt umfasst
- Abdichten des Einzelkörpers (25) des Verriegelungsblocks (20) innerhalb des Rahmenelements (12a) mittels der mit Gewinde versehenen Ringmutter (11).

## Revendications

1. Dispositif antivol pour bicyclettes, ladite bicyclette comprenant dans une zone avant (5) :
- un élément de cadre vertical ou sensiblement vertical (12a),
- une fourche (14) comprenant un tube pivot (21) fixé à la fourche et agencé pour être inséré dans l'élément de cadre (12a), et
- une potence de guidon (31) conçue pour être fixée au tube pivot (21) lorsqu'elle est insérée, lors de l'utilisation, dans l'élément de cadre (12a), ledit dispositif antivol comprenant :
- un bloc de verrouillage (20) comprenant un corps unique (25) conçu pour être inséré et fixé audit tube pivot (21), ledit bloc de verrouillage (20) comprenant en outre une broche rétractable (26) conçu pour faire saillie ou ne pas faire saillie dudit corps unique (25) entraîné par une clé (27),
- un manchon (50) comprenant une fente longitudinale ou un trou (51), ledit manchon étant agencé pour être interposé entre le tube pivot (21) et l'élément de cadre (12a) et pour être fixé à l'élément de cadre, moyennant quoi, lors de l'utilisation, ladite broche rétractable (26) étant agencée pour accrocher ledit élément de cadre (12a), lorsqu'il fait saillie dudit corps unique, en accrochant ladite fente ou trou longitudinal (51), de façon à bloquer le mouvement
du tube pivot (21) quant à l'élément de cadre (12a), **caractérisé par** un écrou de blocage fileté (11) vissé, lors de l'utilisation, audit corps unique dudit bloc de verrouillage et conçu pour serrer ensemble la potence de guidon (31), l'élément de cadre (12a) et la fourche (14).

2. Dispositif antivol selon la revendication 1, ledit manchon étant de forme conique ou cylindrique.

3. Dispositif antivol selon la revendication 1, ledit manchon (50) comprenant en outre une découpe longitudinale (52), de longueur égale à la longueur du manchon (50) et dans une zone opposée à la fente ou au trou (51), ledit
manchon étant conçu pour être inséré dans ledit élément de cadre (12a) et fixé à celui-ci au moyen d'une pression élastique diamétrale.

4. Dispositif antivol selon l'une quelconque des revendications 1 à 3, ledit corps unique (25) du bloc de verrouillage (20) étant fixé intérieurement au tube pivot (21) par l'intermédiaire de goupilles ou grains mécaniques (23).

5. Dispositif antivol selon la revendication 4, lesdites goupilles ou lesdits grains mécaniques (23) étant de type fileté et caché.

6. Dispositif antivol selon l'une quelconque des revendications 1 à 5, ledit corps unique (25) du bloc de verrouillage (20) comprenant, dans une zone supérieure, un filetage (22) conçu pour coopérer par vissage avec l'écrou de blocage (11), ledit écrou de blocage comprenant une bride (42) et un filetage de raccord (41) agencé pour s'adapter audit filetage (22) compris dans la zone supérieure du bloc de verrouillage (20).

7. Dispositif antivol selon la revendication 6, ladite bride (42) étant conçue pour appliquer une pression sur ladite potence de guidon (31) et
serrer ensemble par vissage la potence de guidon (31), l'élément de cadre (12a) et la fourche (14), et
pour sceller le corps unique (25) du bloc de verrouillage (20) à l'intérieur dudit élément de cadre (12a).

8. Dispositif antivol selon la revendication 6 ou 7, ledit filetage (22), compris dans la zone supérieure du corps unique (25), étant du type mâle et ledit filetage de raccord (41), compris dans l'écrou de blocage (11), étant de type femelle.

9. Procédé permettant le montage d'un dispositif antivol (10) dans une zone avant (5) d'une bicyclette, ladite zone avant (5) comprenant une potence de guidon (31), un élément de cadre vertical ou sensiblement vertical (12a) et une fourche (14) et ledit dispositif antivol (10) comprenant un bloc de verrouillage (20) comprenant un corps unique (25) et une broche rétractable (26) conçue pour faire saillie à partir dudit corps unique (25), le procédé comprenant les étapes de :
insertion du bloc de verrouillage (20) dans un tube pivot (21) fixé à la fourche (14) - attachant par rapport aux dimensions un corps unique (25) au tube pivot (21) de façon à localiser, lors de l'utilisation, la broche rétractable (26) à proximité d'un trou (21a) dans le tube pivot (21) et à accrocher, lorsqu'il fait saillie à partir dudit corps unique (25), un manchon (50) interposé entre le tube pivot (21) et l'élément de cadre (12a) et attaché à l'élément de cadre,
- insertion du tube pivot (21) dans l'élément de cadre vertical ou sensiblement vertical (12a),
- fixation direct de la potence de guidon (31) au tube pivot,
- serrage de la potence de guidon (31), de l'élément de cadre (12a) et de la fourche (14) au moyen d'un écrou de blocage fileté (11) appliqué, lors de l'utilisation, audit corps (25) dudit bloc de verrouillage (20) et à ladite potence de guidon (31).

10. Procédé selon la revendication 9 :
- ladite étape de fixation par rapport aux dimensions comprenant l'étape de localisation de ladite broche rétractable (26) à côté d'une fente longitudinale ou d'un trou (51) compris dans le manchon (50).

11. Procédé selon l'une quelconque des revendications 9 à 10, ladite étape de compactage comprenant les étapes de :
- vissage dudit écrou de blocage fileté (11) sur ledit corps unique (25), et
- pressage de ladite potence de guidon (31) au moyen d'une bride (42) comprise dans ledit écrou de blocage fileté (11).

12. Procédé selon l'une quelconque des revendications 9 à 11, ladite étape de serrage comprenant l'étape de
- scellement du corps unique (25) du bloc de verrouillage (20) à l'intérieur dudit élément de cadre (12a) au moyen dudit écrou de blocage fileté (11).
